# EUROPEAN PATENT APPLICATION

(11) **EP 2 241 427 A2**
(43) Date of publication of application: **20.10.2010**
(21) Application number: 10003978.3
(22) Date of filing: 15.04.2010
(51) Int. Cl.: B29B 17/00, B30B 9/32

(54) **Appliance for compressing plastic bottles**

(30) Priority: 16.04.2009 IT PD20090095
(71) Applicant: CAMA s.r.l., 35027 Noventa Padovana (PD) (IT)
(72) Inventor: Guzzo, Orlando, 35027 Noventa Padovana (IT)

(57) **Abstract**

This is an appliance for compressing plastic bottles, made up of a container (8,11,12,5,17,2,1) capable of holding a plastic bottle (14) and including an array of elements (11,12,5,2), preferably cylindrical, connected telescopically that, on their inside at the bottom (5), where the bottle rests (18) and on the top (8) where the bottle is covered, are fitted with dull blades (10,7).

## Description

### APPLIANCE FOR COMPRESSING PLASTIC BOTTLES

As is well known, one of the problems of waste disposal is that of the packaging, and this includes plastic bottles. Currently, according to normal practice, in order to reduce the volume of empty plastic bottles, you take off the cap/stopper, the bottles are crushed, using the sole of the foot against the floor if needed, and exploiting the vacuum caused by the reduction in the air originally contained in it, the cap is put back on to prevent the volume regaining its initial volume because of the plastic's elasticity.

This creates an encumbrance not only in the domestic setting but also in the procedure of the various stages of disposal carried out by authorised bodies.

Another inconvenience is the fact that with the above-mentioned procedure, the top, which should be recuperated because it is made of a type of valuable plastic is, however, disposed of with the bottle.

The purpose of this patent is to overcome the above-mentioned drawbacks, i.e. to greatly reduce the volume of the empty plastic bottle facilitating the crushing operation, reducing the residual volume as much as possible, and allowing the caps to be recuperated because they are no longer needed after the crushing has taken place.

The patent consists of the creation of the manual equipment, mainly for domestic use, as explained below.

Said appliance is basically composed of connected telescoping cylindrical elements, a base and a cover.

When they are fully extended the appliance creates the space on the inside for containing a plastic bottle (obviously empty). For positioning the bottle inside the appliance the two upper telescoping elements with the relative cover are removed from the cylindrical base element.

Then the bottle is positioned with the bottom resting in the special housing on the cylindrical base element.

The two upper cylindrical elements with relative cover are put back over the cylindrical base element, which had previously been removed, so that they contain the protruding part of the bottle.

The central cover has a hole that allows the upper part of the bottle, which has the threading where the cap was applied, to come out.

The housing in which the bottom of the bottle rests is fitted with special dull blades facing upwards.

In the same way the bottom of the cover has special dull blades facing downwards.

By pressing on the cover, since the three cylindrical elements are telescopic, one element goes inside another while the blades of the cover and the blades of the base element progressively get the form of the bottle and by collapsing its fibres reduce its height.

Towards the final stage of the crushing of the bottle, in order to consolidate the collapsing, two diametrically opposite elements, which drop down from the outside edge of the cover, having a series of saw tooth profiles on the outside, join with two corresponding elements that come up from the outer edge of the base, which are fitted with a series of saw tooth elements on the inside.

To take out the crushed bottle on the inside, the saw tooth elements uncouple creating a space between the outside one and the ones inside, and the two upper cylindrical telescoping elements with relative cover are removed.

The appliance is then ready for another cycle.

What has been described is clarified by examining the attached drawings.

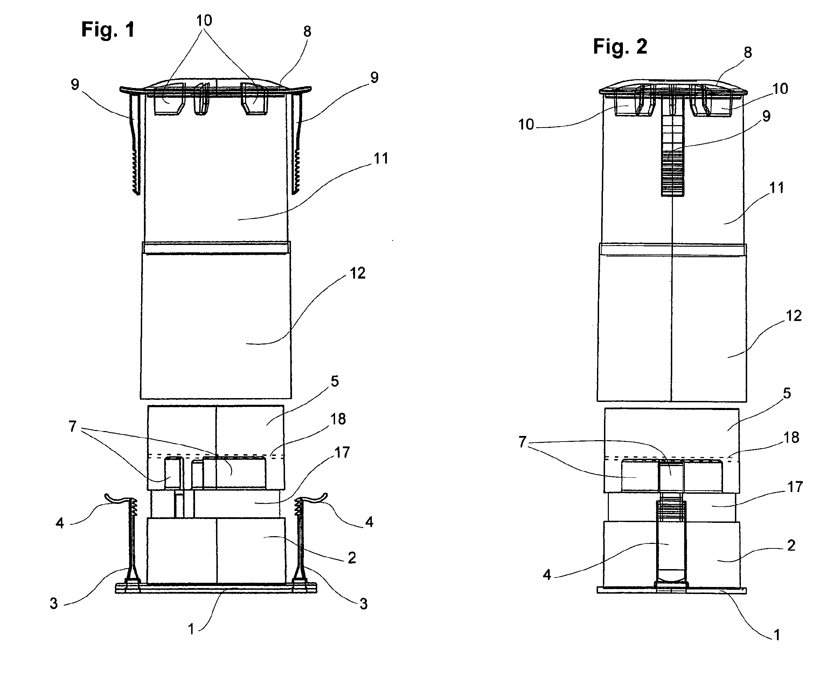

Fig. 1 is a side view of the appliance for compressing plastic bottles (with the interior parts shown). In the diagram it can be seen that the two cylindrical upper elements with the cover are close to the third cylindrical base element but separated from it.

It can be seen that on the outside edge of the cover two elements drop into diametrically opposite positions, fitted on the lower end part with saw tooth profiles.

It can also be seen that from the outside edge of the surface of the base two elements rise up into a diametrically opposite position, fitted on the upper end with saw tooth profiles and fitted on the top with wing-shaped appendages that have a basically horizontal outward-facing arrangement.

We can also see a series of blades coming down from under the cover and a series of blades coming up from the surface where the bottle rests, belonging to the cylindrical base element.

Fig. 2 shows the appliance of fig. 1 rotated through 90°.

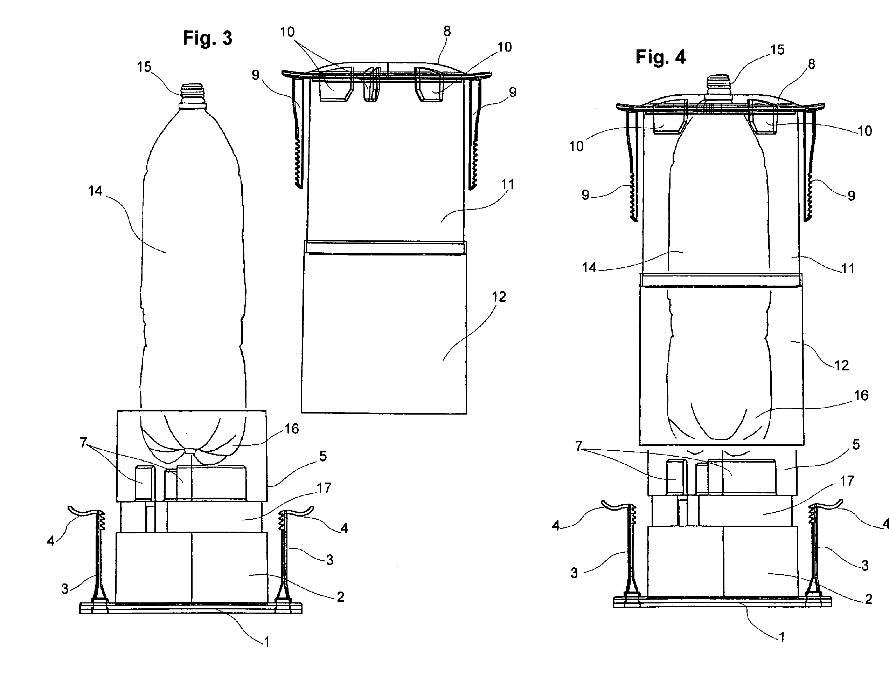

Fig. 3 shows the appliance described in fig. 1, where the cylindrical base element supports the bottle to be compressed, which is positioned on a surface fitted with blades, while the two cylindrical and telescoped upper elements, which are fitted with a cover, are shifted laterally with respect to the cylindrical base.

Fig. 4 shows the next stage with respect to fig. 3, where the three elements of the appliance are assembled telescopically, with the bottle to be compressed on the inside.

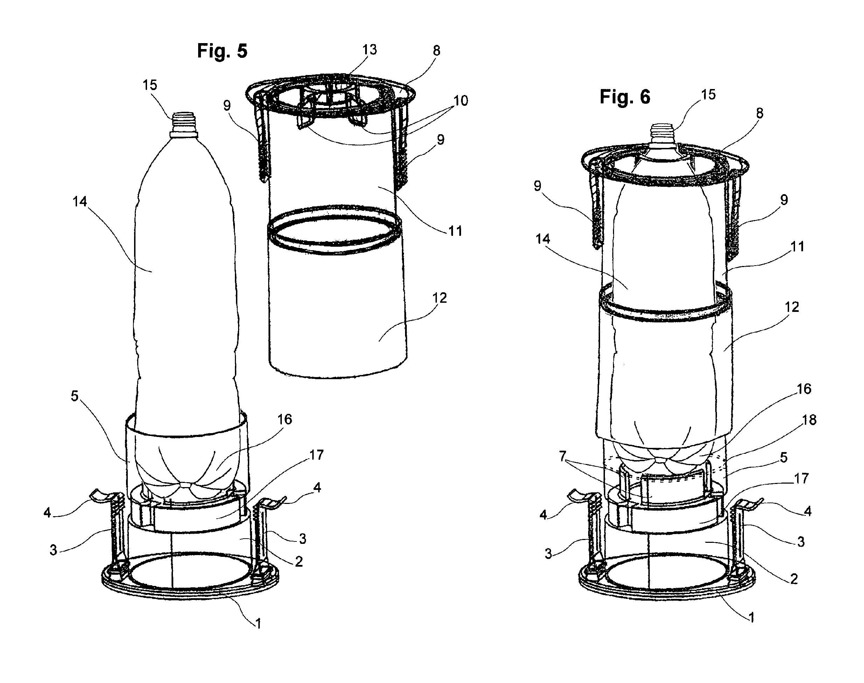

Fig. 5 is the diagram corresponding to fig. 3 where the elements making up the appliance are now seen axonometrically from above.

Fig. 6 is the diagram corresponding to fig. 4 where the elements making up the appliance are now seen axonometrically from above.

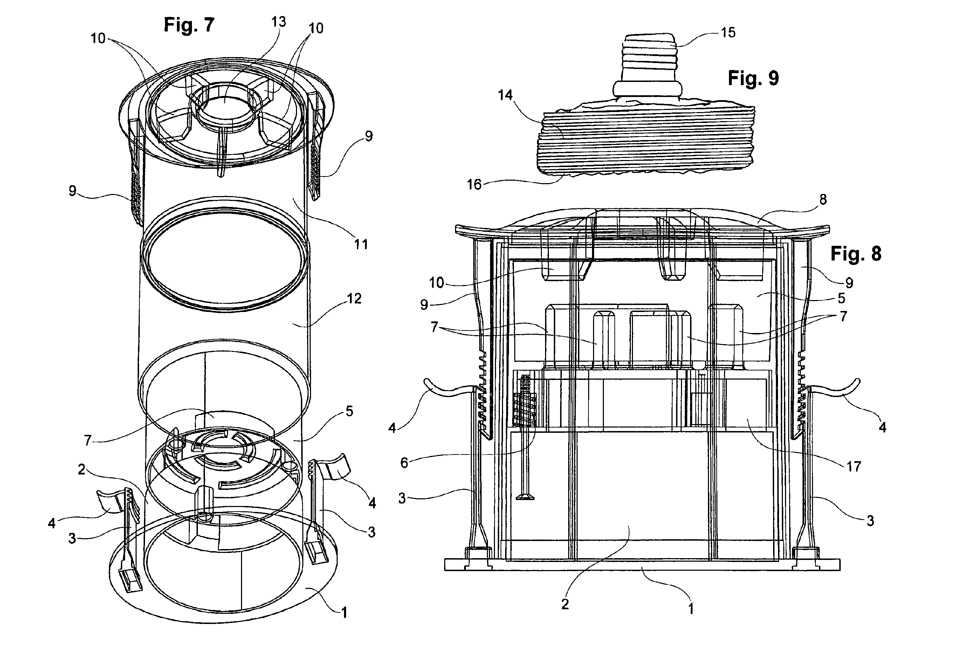

Fig. 7 is a new axonometric view from above the appliance, where now the lower blades on the base element and the blades coming down from the cover can be seen; as well as the configuration of the opening in the centre of the cover to allow the upper part of the neck of the bottle to pass through.

Fig. 8 is an enlarged view of the appliance (to highlight some of its details) where all its elements have completely closed up telescopically one on the other, in the configuration that it takes when the bottle is totally compressed (in the diagram we can see that the compressed bottle is not in the appliance).

Fig. 9 shows the bottle that has been compressed by the appliance of the patent.

To crush a plastic bottle you do as follows:

You take the appliance for crushing the plastic bottle and open it, separating the telescoping cylindrical elements 11, 12, and the attached cover, which make up the top part of the appliance, from the base 2, 17, 5, 1. In this way the inside of element 5 is rendered available, which is solidly attached to element 17 supported elastically by means of the spring devices 6 of the cylindrical element 2 on the base 1.

The bottle 14 is positioned with its top part 16 inside the element 5 from whose surface 18 come out the top ends of the blades 7, which come out of the element 17, taking care to remove the cap (not shown) from the threaded top part so it can be re-used.

You take the top part of the appliance 11, 12 8 and position it over the bottle 14, which had previously been put inside element 5, (which remains inside it), until you start to telescopically hit the base element 5, and in such a way that the top threaded part 15 of the neck of the bottle 14 sticks out of the circular hole 13 in the middle of the cover 8.

At this point you start to push down on the cover 8 to lower it.

This force is delivered onto the top of the bottle 14, positioned inside the appliance, by means of the blades 10 that drop down from under the cover 8 and on the bottom by means of the blades 7 of the element 17 that come out of the base 18 of the element 5, while the above-mentioned base 18 is lowered compressing the springs 6 that elastically support it.

While said blades 7, 10 penetrate the structure of the bottle 14 and destroy the load-bearing fibres, starting the compression of the bottle itself, the telescoped elements 11, 12 5, 2 start to go back into each other.

The process for the total compression of the bottle 14 is completed when the cylindrical telescoped elements 11, 12, 5, 2 have fully gone back into one another.

Near the final part of the compression, in order to assist the complete compression of the bottle 14, maintaining the state that has progressively been attained, two elements 9 come into play that come down from the outside edge of the cover 8 and have saw tooth contours on the outside, which couple with the two elements 3 that come up from the outside edge of the base 1, having saw tooth contours on the inside.

Having stabilised the compression of the bottle 14, you operate the winged appendages 4 of the elements 3, opening them wide and releasing them from the corresponding elements 9.

Once the operation is finished the top part 11, 12, 8 of the appliance is raised and separated and the compressed bottle 14, 15, 16 is taken out. The appliance is now ready for further cycles to compress plastic bottles.

After what has been set out above it is clear that the patent is valid both for its innovation as well as for its inventive capacity for having realised a simple to use domestic appliance that easily resolves the problem of the space taken up by plastic bottles, which are widely used, without the need for using the closure cap.

## Claims

1. Appliance for compressing plastic bottles, **characterised by** the fact that it is composed of a container (8,11,12,5,17,2,1) that can hold a plastic bottle (14) which, on its inside, at the bottom(5), where the bottle rests (18) and/or at the top (8) where the bottle is covered, is equipped with special blades (10,7) that come into contact with the outside of the plastic bottle during the compression operation.

2. Appliance for compressing plastic bottles according to claim 1 **characterised by** the fact that said container (8,11,12,5,17,2,1) is composed of a set of elements (11,12,5,2), telescoped between each other.

3. Appliance for compressing plastic bottles according to claim 1 or 2 **characterised by** the fact that said elements (11,12,5,2), telescoped between each other, are cylindrical.

4. Appliance for compressing plastic bottles according to claim 1 **characterised by** the fact that it includes a cover (8) with a central opening (13) through which the top part of the neck (15) of the bottle (14) earmarked for the stopper comes out.

5. Appliance for compressing plastic bottles according to claim 1 or 2 **characterised by** the fact that from the outside edge of the cover (8) one or more elements (9) come down that are fitted with saw tooth profiles and by the fact from the outside edge of the base (1) one or more elements (3) come up that are in line with the descending upper elements and are fitted with saw tooth profiles.

6. Appliance for compressing plastic bottles according to the previous claim **characterised by** the fact that the blades (10, 7) on the top and the bottom are alternating and/or mirror images.

7. Appliance for compressing plastic bottles according to one or more of the previous claims, **characterised by** the fact that the height of the appliance when not being used is reduced from less than a half to about ¼ of the height of the plastic bottle that will be compressed by the appliance.

8. Appliance for compressing plastic bottles according to one or more of the previous claims from 1 to 4, **characterised by** the fact that there is an alternating arrangement of the lower (7) and upper (10) blades.

9. Appliance for compressing plastic bottles according to one or more of the previous claims **characterised by** the fact that the surface (18) on which the bottle (14) to be compressed is put is elastically supported by special springs (6) and has openings to allow the blades beneath (7) to come out when it is lowered.
